(19) Europäisches Patentamt
European Patent Office
Office européen des brevets

(11) **EP 2 228 410 B1**

(12) **EUROPÄISCHE PATENTSCHRIFT**

(45) Veröffentlichungstag und Bekanntmachung des Hinweises auf die Patenterteilung:
**21.09.2011 Patentblatt 2011/38**

(21) Anmeldenummer: **10001556.9**

(22) Anmeldetag: **16.02.2010**

(51) Int Cl.:
*C09B 41/00* (2006.01)   *C08K 5/00* (2006.01)
*C09D 11/02* (2006.01)   *C09D 5/00* (2006.01)

(54) **C.I. Pigment Red 112 mit verbesserter Dispergierbarkeit**

C.I. Pigment Red 112 with improved dispersion

Pigment rouge C.I. 112 doté d'une aptitude à la dispersion améliorée

(84) Benannte Vertragsstaaten:
**AT BE CH DE DK ES FR GB IT LI NL PT SE**

(30) Priorität: **11.03.2009 DE 102009012685**

(43) Veröffentlichungstag der Anmeldung:
**15.09.2010 Patentblatt 2010/37**

(73) Patentinhaber: **Clariant Finance (BVI) Limited
Road Town, Tortola (VG)**

(72) Erfinder:
• **Schneider, Lars, Dr.
65835 Liederbach (DE)**
• **Reif, Martin, Dr.
60489 Frankfurt am Main (DE)**

(74) Vertreter: **Hütter, Klaus et al
Clariant Produkte (Deutschland) GmbH
Group Intellectual Property
Am Unisys-Park 1
65843 Sulzbach (DE)**

(56) Entgegenhaltungen:
**EP-A1- 0 451 094     EP-A1- 1 167 460
EP-A2- 0 319 452     WO-A1-01/59013
WO-A2-02/068540     US-A- 5 243 032**

**Beschreibung**

Um ein Pigment als farbgebende Komponente in eine Farbe, eine Drucktinte, ein Kunstharz oder einen Lack zu bringen, muss jenes im jeweiligen Anwendungsmedium durch Dispergierung möglichst fein verteilt werden, was oftmals mit einem hohen Zeit- und Energieaufwand verbunden ist. Bei diesem mechanischen Prozess werden Agglomerate zerkleinert und die Oberfläche des Pigments vom Bindemittelsystem benetzt. Erst dann kann das Pigment seine anwendungstechnischen Eigenschaften voll entfalten. Hersteller von farbigen Produkten bevorzugen solche Pigmente, bei denen dieser Dispergieraufwand möglichst gering ist.

Es sind eine ganze Reihe von unterschiedlichen Möglichkeiten beschrieben, wie leicht dispergierbare Pigmente herzustellen sind. Eine Verbesserung der Dispergierbarkeit kann durch Oberflächenmodifizierung, Oberflächenbehandlung, Oberflächenbelegung oder die Anwesenheit von bestimmten inerten Hilfsmitteln oder Reagenzien erreicht werden. Eine andere Möglichkeit ist die Herstellung von Flush-Pasten, die aus einem wässrigen Pigmentpresskuchen durch Verdrängung des Wassers mit Bindemitteln wie Alkydharzen, Celluloseacetobutyrat, Mineralöl oder beliebigen organischen, mit Wasser nicht mischbaren Lösemitteln erzeugt werden. Eine weitere Möglichkeit ist die Herstellung von Präparationen, die ein vordispergiertes Pigment enthalten und deshalb deutlich leichter in ein Anwendungsmedium gebracht werden können als das zu Grunde liegende trockene Pigmentpulver.

In DE-A-14 69 782 ist beschrieben, wie die Behandlung der Pigmente mit langkettigen aliphatischen Aminen zu einer leichten Dispergierbarkeit führt. Dazu wird das Amin in Form seines Ammoniumsalzes mit dem feuchten Pigment vermischt und durch pH-Einstellung in Form des freien Amins freigesetzt.

In EP-A-0 451 094 ist beschrieben, wie ein ähnlicher Effekt durch gezielten Zusatz von Azofarbstoffen erreicht wird. Dabei wird die Fällung der Kuppelkomponente schon in Gegenwart des Farbstoffs durchgeführt. Der Farbstoff ist während der gesamten Synthese des Pigments anwesend und ebenfalls in der hergestellten Zubereitung enthalten.

In JP 09176514 ist beschrieben, dass man durch eine Nachbehandlung von Pigmenten mit Fluor zu einer verbesserten Dispergierbarkeit gelangt.

In EP 1 081 195 A2 ist beschrieben, dass Pigmente in der direkt nach der Synthese vorliegenden Feinverteilung durch Umhüllung der Oberfläche mit Polymerschichten stabilisiert werden.

In WO 2004/094540 ist beschrieben, wie man durch Oberflächenbelegung den Energieeintrag zur ausreichenden Verteilung des Pigments im Anwendungsmedium um etwa 20 % verringern kann. Dies geschieht durch Ummantelung der Pigmentteilchen mit amingruppenhaltigen (Meth)acrylatcopolymeren.

Die in WO 02/068540 und WO 01/59013 erwähnten Kupplungsverfahren werden ebenfalls in Mikroreaktoren durchgeführt; Pigmentrot 112 wird als Pigment beiläufig erwähnt.

Alle genannten Möglichkeiten zur Verbesserung der Dispergierbarkeit sind mit zusätzlichen Materialkosten, zusätzlichen Mischprozessen oder weiteren Arbeitsschritten neben der eigentlichen Pigmentsynthese verbunden. Die eingesetzten zusätzlichen Additive können darüber hinaus die anwendungstechnischen Eigenschaften neben der verbesserten Dispergierbarkeit in ungewollter Weise verändern. Die resultierende Zubereitung kann je nach Chemikaliengesetzgebung kennzeichnungspflichtig sein. Flush-Pasten und Präparationen sind zudem weniger universell einsetzbar und lassen sich schwer standardisieren. Darüber hinaus fallen weitere Kosten für Maßnahmen gegen Bakterien- und Pilzbefall an.

C.I. Pigment Red 112 ist ein industriell häufig eingesetztes Naphthol-AS-Pigment. Es hat aufgrund seiner coloristischen Eigenschaften breiten Einsatz in Druckfarben, Lacken und Anstrichfarben gefunden.

Ein unbehandeltes C.I. Pigment Red 112 lässt sich nur mit hohem Dispergieraufwand in ein Bindemittelsystem fein verteilt einbringen. Will man Energieaufwand sparen, so sind größere Mengen an Dispergierhilfsmittel notwendig. Diese größeren Mengen führen aber oft zu einer entsprechend großen Beeinflussung anderer Eigenschaften, die meist nicht gewünscht sind.

Aufgabe der Erfindung war es deshalb, leicht dispergierbares C.I. Pigment Red 112 bereitzustellen, ohne dass die Anwendung von Hilfsmitteln oder Additiven oder eine Oberflächenmodifizierung erforderlich wären.

Es wurde gefunden, dass die erfindungsgemäße Aufgabe überraschenderweise durch eine neue Pigmentsynthese mittels Mikroreaktionstechnik, wie z. B. in WO 2005/105927 beschrieben, gelöst werden kann. Anders als dort wird die Kuppelkomponente allerdings nicht in Form ihrer Lösung eingesetzt, sondern in einem vorgeschalteten Mikroreaktor gefällt.

Gegenstand der Erfindung ist ein Verfahren zur Herstellung von ungecoatetem, leicht dispergierbarem C.I. Pigment Red 112 durch Azokupplung in einem Mikroreaktor, dadurch gekennzeichnet, dass die Kuppelkomponente in einem vorgeschalteten Mikroreaktor ausgefällt wird und die ausgefällte Kuppelkomponente in feinverteilter Form mit der Diazokomponente in einem Mikroreaktor gekuppelt wird.

Unter dem Begriff "ungecoatet" wird ein Pigment verstanden, dessen Oberfläche frei ist von nicht auswaschbaren Additiven oder Hilfsmitteln und insbesondere frei von Polymerschichten, wie z. B. die im Stand der Technik erwähnten (Meth)Acrylatpolymere.

Unter dem Begriff "leicht dispergierbar" wird ein Pigment mit einer Dispergierhärte kleiner als 45 verstanden, wie nachstehend definiert.

Die zur Herstellung von C.I. Pigment Red 112 eingesetzte Kuppelkomponente ist 2-Hydroxy-3-naphthoesäure-N-(2-methylphenyl)amid. Das zur Herstellung der Diazokomponente eingesetzte Amin ist 2,4,5-Trichloranilin.

Im erfindungsgemäßen Verfahren werden zumindest die Fällung der Kuppelkomponente und die Azokupplung in einem Mikroreaktor durchgeführt. Es ist auch eine Kombination von drei Reaktoren für Fällung der Kuppelkomponente, Diazotierung des Amins zum Diazoniumsalz und Reaktion beider Komponenten zum Azo-Pigment möglich. Die Diazotierung kann unter üblichen Bedingungen, d. h. bei Temperaturen zwischen 0 und 15 °C und einem pH zwischen -1 und 1 erfolgen. Die ausgefällte Kupplungskomponente wird in feinverteilter Form mit der Diazokomponente zur Reaktion gebracht. Daher wird in einer bevorzugten Verfahrensvariante die Kupplungskomponente im Anschluss an die Fällung einer Nassmahlung, z. B. auf einer Kugelmühle oder einem gleichwertigen Aggregat, unterworfen, bis eine Korngröße von etwa 1 Micrometer oder kleiner erreicht ist. Als Mikroreaktoren können die in WO2005/105927 A1 beschriebenen Apparate und Vorrichtungen eingesetzt werden.

Ein Mikroreaktor ist aus mehreren aufeinander gestapelten und miteinander verbundenen Plättchen aufgebaut, auf deren Oberflächen sich mikromechanisch erzeugte Strukturen befinden, die in ihrem Zusammenwirken Reaktionsräume bilden, um chemische Reaktionen auszuführen. Es ist wenigstens ein durch das System hindurchführender Kanal enthalten, der mit dem Einlass und dem Auslass verbunden ist.

Die Flussraten der Materialströme sind apparativ limitiert, beispielsweise durch die sich je nach geometrischer Auslegung des Mikroreaktors einstellenden Drücke. Es ist wünschenswert, dass die Reaktion im Mikroreaktor vollständig abläuft, es kann sich aber auch eine Verweilzone anschließen, um eine gegebenenfalls erforderliche Verweilzeit zu schaffen. Die Flussraten sind zweckmäßigerweise zwischen 0,05 ml/min und 5 l/min, bevorzugt zwischen 0,05 und 500 ml/min, besonders bevorzugt zwischen 0,05 und 250 ml/min, und insbesondere zwischen 0,1 und 100 ml/min.

Das Mikroreaktionssystem wird kontinuierlich betrieben, wobei sich die jeweils miteinander zur Vermischung gebrachten Fluidmengen im Mikro- ($\mu$l) bis Milliliter- (ml) Bereich bewegen.

Entscheidend für die Herstellung von Feststoffen in diesem Mikroreaktionssystem sind die Dimensionen der mikrostrukturierten Bereiche innerhalb des Reaktors. Diese müssen so groß gewählt sein, dass Feststoffteilchen problemlos passieren können und so keine Verstopfung der Kanäle auftritt. Die kleinste lichte Weite der Mikrostrukturen sollte ca. zehnmal größer sein als der Durchmesser der größten Feststoffteilchen. Weiterhin muss durch entsprechende geometrische Gestaltung Sorge getragen werden, dass keine Totwasserzonen, wie z. B. Sackgassen oder scharfe Ecken, in denen Feststoffteilchen sedimentieren können, vorhanden sind. Bevorzugt sind daher kontinuierliche Bahnen mit runden Ecken. Die Strukturen müssen klein genug sein, um die immanenten Vorteile der Mikroreaktionstechnik auszunutzen, nämlich exakte Temperaturkontrolle, laminare Strömung, diffusives Mischen und geringes internes Reaktionsvolumen. Die lichte Weite der lösungs- oder suspensionsführenden Kanäle beträgt zweckmäßigerweise 5 bis 10.000 $\mu$m, vorzugsweise 5 bis 2.000 $\mu$m, besonders bevorzugt 10 bis 800 $\mu$m, insbesondere 20 bis 700 $\mu$m.

Die lichte Weite der Wärmetauscherkanäle richtet sich in erster Linie nach der lichten Weite der flüssigkeits- oder suspensionsführenden Kanäle und ist zweckmäßigerweise kleiner oder gleich 10.000 $\mu$m, vorzugsweise kleiner oder gleich 2.000 $\mu$m, insbesondere kleiner oder gleich 800 $\mu$m. Die Untergrenze der lichten Weite der Wärmetauscherkanäle ist unkritisch und wird allenfalls durch den Druckanstieg der zu pumpenden Wärmetauscherflüssigkeit und von der Notwendigkeit der optimalen Wärmezufuhr oder -abfuhr begrenzt.

Die Dimensionen des verwendeten Mikroreaktionssystems sind: Wärmetauscherstrukturen: Kanalbreite etwa 600 $\mu$m, Kanalhöhe: etwa 250 $\mu$m; Mischer und Verweilzeit: Kanalbreite etwa 600 $\mu$m, Kanalhöhe etwa 500 $\mu$m.

Der Mikroreaktor wird vorzugsweise von oben mit allen Wärmetauscherfluiden und Reaktanden beschickt. Die Abfuhr des Produktes und der Wärmertauscherfluide erfolgt vorzugsweise ebenfalls nach oben. Die eventuelle Zufuhr dritter und vierter an der Reaktion beteiligter Flüssigkeiten (z. B. Pufferlösungen) wird über eine direkt vor dem Reaktor befindliche T-Verzweigung realisiert, d. h. jeweils ein Reaktant kann vorab mit der Pufferlösung vermischt werden. Die Kontrolle der benötigten Konzentrationen und Flüsse wird vorzugsweise über Präzisionskolbenpumpen und einer computergesteuerten Regelung vorgenommen. Die Reaktionstemperatur wird über integrierte Sensoren überwacht und mit Hilfe der Regelung und eines Thermostaten/Cryostaten überwacht und gesteuert.

Die Herstellung von Mischungen von Einsatzstoffen kann auch vorher in Mikromischern oder in vorgeschalteten Vermischungszonen stattfinden. Es können auch Einsatzstoffe in nachgeschalteten Vermischungszonen oder in nachgeschalteten Mikromischern oder -reaktoren zudosiert werden.

Das hier verwendete System ist aus Edelstahl gefertigt; andere Materialien wie zum Beispiel Glas, Keramik, Silizium, Kunststoffe oder andere Metalle sind ebenso einsetzbar.

Die erfindungsgemäße Pigmentsynthese läuft bevorzugt folgendermaßen ab: Zunächst wird die Kupplungskomponente 2-Hydroxy-3-naphthoesäure-N-(2-methylphenyl)amid bevorzugt mit Natronlauge gelöst, vorzugsweise in wässriger Lösung oder in Mischungen aus Wasser und Lösungsmitteln oder in organischen Lösemitteln, wie beispielsweise Alkohole mit 1 bis 10 C-Atomen, wie Methanol, Ethanol, n-Propanol, Isopropanol, Butanole, wie n-Butanol, sek.-Butanol, tert.-Butanol, Pentanole, wie n-Pentanol, 2-Methyl-2-butanol, Hexanole, wie 2-Methyl-2-pentanol, 3-Methyl-3-pentanol, 2-Methyl-2-hexanol, 3-Ethyl-3-pentanol, Octanole, wie 2,4,4-Trimethyl-2-pentanol, Cyclohexanol; oder Glykole, wie Ethylenglykol, Diethylenglykol, Propylenglykol, Dipropylenglykol, oder Glycerin; Polyglykole, wie Polyethylenglykole oder Polypropylenglykole; Ether, wie Methylisobutylether, Tetrahydrofuran oder Dimethoxyethan; Glykolether, wie Monomethyl- oder Monoethylether des Ethylen- oder Propylenglykols, Diethylenglykolmonomethylether, Diethylenglykolmonoethylether, Butylglykole oder Methoxybutanol; Ketone, wie Aceton, Diethylketon, Methylisobutylketon, Methylethylketon oder Cyclohexanon; aliphatische Säureamide, wie Formamid, Dimethylformamid, N-Methylacetamid oder N,N-Dimethylacetamid; Harnstoffderivate, wie Tetramethylharnstoff; oder cyclische Carbonsäureamide, wie N-Methylpyrrolidon, Valero- oder Caprolactam; Ester, wie Carbonsäure-$C_1$-$C_6$-alkylester, wie Ameisensäurebutylester, Essigsäureethylester oder Propionsäurepropylester; oder Carbonsäure-$C_1$-$C_6$-glykolester; oder Glykoletheracetate, wie 1-Methoxy-2-propylacetat; oder Phthalsäure- oder Benzoesäure-$C_1$-$C_6$-alkylester, wie Benzoesäureethylester; cyclische Ester, wie Caprolacton; Nitrile, wie Acetonitril oder Benzonitril; aliphatische oder aromatische Kohlenwasserstoffe, wie Cyclohexan oder Benzol; oder durch Alkyl, Alkoxy, Nitro oder Halogen substituiertes Benzol, wie Toluol, Xylole, Ethylbenzol, Anisol, Nitrobenzol, Chlorbenzol, o-Dichlorbenzol, 1,2,4-Trichlorbenzol oder Brombenzol; oder andere substituierte Aromaten, wie Benzoesäure oder Phenol; aromatische Heterocyclen, wie Pyridin, Morpholin, Picolin oder Chinolin; sowie Hexamethylphosphorsäuretriamid, 1,3-Dimetyl-2-imidazolidinon, Dimethylsulfoxid und Sulfolan. Die genannten Lösemittel können auch als Mischungen eingesetzt werden. Vorzugsweise werden mit Wasser mischbare Lösemittel eingesetzt.

Die Fällung der Kupplungskomponente erfolgt anschließend durch Einleiten der Kupplerlösung sowie der Fällungsmittellösung über zwei Edukteingänge des Mikroreaktors und Vermischen dieser beiden Lösungen im Reaktorraum. Die Fällungsmittellösung ist vorzugsweise eine wässrige Lösung einer organischen oder anorganischen Säure, wie z. B. Essigsäure, Salzsäure, Schwefelsäure oder eine Mischung verschiedener Säuren. Die Fällung erfolgt vorzugsweise bei Temperaturen zwischen 0 und 20 °C, insbesondere zwischen 5 und 10 °C.

Die Azokupplungsreaktion erfolgt vorzugsweise in wässriger Lösung oder Suspension, es können aber auch organische Lösemittel, wie vorstehend aufgezählt, gegebenenfalls im Gemisch mit Wasser eingesetzt werden. Die genannten Lösemittel können auch als Mischungen eingesetzt werden. Vorzugsweise werden mit Wasser mischbare Lösemittel eingesetzt. Die Azokupplung erfolgt vorzugsweise bei Temperaturen zwischen 20 und 40 °C, insbesondere zwischen 25 und 35 °C.

Obwohl nicht erforderlich, können im erfindungsgemäßen Verfahren auch die in den konventionellen Verfahren verwendeten Hilfsmittel wie beispielsweise Tenside, pigmentäre und nichtpigmentäre Dispergiermittel, Füllstoffe, Stellmittel, Harze, Wachse, Entschäumer, Antistaubmittel, Extender, Farbmittel zum Nuancieren, Konservierungsmittel, Trocknungsverzögerungsmittel, Additive zur Steuerung der Rheologie, Netzmittel, Antioxidantien, UV-Absorber, Lichtstabilisatoren, oder eine Kombination davon eingesetzt werden.

Die Zugabe der Hilfsmittel kann zu einem beliebigen Zeitpunkt vor, während oder nach der Reaktion im Mikroreaktor erfolgen, auf einmal oder in mehreren Portionen. Dabei können die Hilfsmittel beispielsweise direkt zu den Lösungen oder Suspensionen der Reaktanden, aber auch während der Reaktion in flüssiger, gelöster oder suspendierter Form zugegeben werden. Die Gesamtmenge der zugegebenen Hilfsmittel kann 0 bis 40 Gew.-%, bevorzugt 1 bis 30 Gew.-%, besonders bevorzugt 2,5 bis 25 Gew.-%, bezogen auf C.I. Pigment Red 112, betragen.

Das erfindungsgemäß hergestellte C.I. Pigment Red 112 zeichnet sich durch eine besonders niedrige Dispergierhärte aus, die durch keines der bislang bekannten Syntheseverfahren erreicht wird.

Gegenstand der Erfindung ist daher auch ein ungecoatetes C.I. Pigment Red 112, gekennzeichnet durch eine Dispergierhärte in Alkydharzlack von kleiner oder gleich 45, vorzugsweise kleiner oder gleich 40, besonders bevorzugt kleiner oder gleich 35, insbesondere kleiner oder gleich 25.

Weiterhin Gegenstand der Erfindung ist ein ungecoatetes C.I. Pigment Red 112, hergestellt nach dem erfindungsgemäßen Verfahren.

Die Dispergierhärte ist ein Maß für die Dispergierbarkeit eines Pigments in einem bestimmten Anwendungsmedium. So wird beispielsweise in der EP1282666 B1 die Dispergierhärte von Pigmenten in LDPE-Kunststoffen beschrieben.

Im Falle von C.I. Pigment Red 112 ist das Anwendungsmedium bevorzugt eine Farbe oder ein Lack, so dass die Bestimmung der Dispergierhärte zweckmäßigerweise in einem Alkydharzlack durchgeführt wird.

Alkydharze sind synthetische hydrophobe Polymere, die durch Veresterung von mehrwertigen Alkoholen mit mehrprotonigen Säuren unter Zusatz von Ölen oder Fettsäuren entstehen. Als mehrwertiger Alkohol wird vor allem Glycerin, Pentaerythrit oder Trimethylolpropan, als mehrprotonige Säure vor allem eine Phthalsäure, meist in Form von Phthalsäureanhydrid, auch Isophthalsäure, verwendet.

Öle sind beispielsweise Leinöl, Fischöl, Sojaöl, Baumwollsaatöl, Sonnenblumenöl, Tallöl, die zwei- und mehrfach ungesättigte Fettsäuren, wie z. B. 9,12,15-Linolensäure, enthalten können.

Bei Alkydharzen unterscheidet man nach der Höhe des Öl- bzw. Fettsäuregehaltes:

Unter 40 % Öl: kurzölig; zwischen 40 und 60 % Öl: mittelölig; über 60 % Öl: langölig.

Öle, die eine ausreichende Menge an zwei- oder mehrfach ungesättigten Fettsäuren enthalten, bezeichnet man als trocknende Öle, die entsprechenden Alkydharze als trocknende oder auch als lufttrocknende Alkydharze. Alkydharze werden kommerziell meist in gelöster Form angeboten. Als Lösungsmittel kommen in Betracht: Lackbenzin, Xylol, Ethylbenzol, Ethylacetat, Butylacetat, Aceton, Methylethylketon (MEK), Methylisobutylketon (MIBK), Methoxypropanol, Methoxypropylacetat, Methanol, Ethanol, Isopropanol, isomere Butanole sowie Gemische davon.

Pigmentierte Alkydharzlacke weisen in der Regel einen Pigmentgehalt von 5 bis 35 Gew.-% auf.

Für die erfindungsgemäße Bestimmung der Dispergierhärte im pigmentierten (P.R. 112) Alkydharzlack werden die relativen Farbstärke von Alkydharzlack-Anreibungen bei 6 Minuten und bei neunzig Minuten Dispergierzeit nach folgender Formel verglichen (FS = rel. Farbstärke):

$$Dispergierh\ddot{a}rte = \left( \frac{FS(90\,min)}{FS(6\,min)} - 1 \right) \cdot 100$$

Je kleiner der Wert für die Dispergierhärte, desto leichter ist das Pigment dispergierbar.

Dabei werden die Pigmentproben mit einer bestimmten Menge Anreibelack (lufttrocknender, langöliger Alkydharzlack) versetzt und in einem Dispergieraggregat, z. B. einem Paintshaker, für jeweils 6 Minuten und 90 Minuten unter sonst gleichen Bedingungen dispergiert.

Der Anreibelack setzt sich beispielsweise wie folgt zusammen:

Ca. 15 Gew.-% C.I. Pigment Red 112, ca. 85 Gew.-% Alkydharzlösung.

Die Alkydharzlösung besteht z. B. aus:

| | |
|---|---|
| 45,4 Gew.-% | Lösung (70 gew.%ig in Lackbenzin) eines langöligen, lufttrocknenden Alkydharzes auf Sojaöl/ Phthalsäureanhydrid-Basis (62 Gew.-% Öl, 27 Gew.-% Phthalsäureanhydrid, Rest vor allem Pentaerythrit und /oder Glycerin; |
| 2,6 Gew.-% | Sikkativ (Ca-Octoat),10 gew.-%ig in Lackbenzin, z. B.Octa-Soligen Ca; |
| 2,8 Gew.-% | Sojalecithin; |
| 49,2 Gew.-% | Lackbenzin. |

Langölige, lufttrocknende Alkydharze sind kommerziell erhältlich, z. B. unter dem Handelsnamen Vialkyd® AS 673 h / 70 % White Spirit (Fa. Cytec).

Anschließend werden die dispergierten Anreibelacke mit weiterem Alkydharzlack sowie einem Weißlack verdünnt, homogenisiert, auf eine Prüfkarte aufgezogen und getrocknet. Die Bestimmung der FS erfolgt farbmetrisch nach der CIELAB-Formel.

Die Werte der erfindungsgemäßen Dispergierhärte beziehen sich bevorzugt auf eine Bestimmung in einem lufttrocknenden, langöligen Alkydharz, insbesondere in der vorstehend beschriebenen Anreibelack-Zusammensetzung.

Das erfindungsgemäß hergestellte Pigment zeichnet sich weiterhin durch einen sehr geringen PCB-Gehalt von kleiner als 25 ppm, vorzugsweise kleiner als 10 ppm, aus.

Das erfindungsgemäß hergestellte Pigment zeichnet sich weiterhin durch einen sehr geringen Restkuppler-Gehalt von kleiner als 1,0 Gew-%, vorzugsweise kleiner als 0,70 Gew-%, aus.

Das erfindungsgemäße P.R. 112 lässt sich prinzipiell zum Pigmentieren von allen hochmolekularen organischen Materialien natürlicher oder synthetischer Herkunft einsetzen, beispielsweise von Kunststoffen, Harzen, Lacken, insbesondere Metallic-Lacken, Anstrichfarben, elektrophotographischen Tonern und Entwicklern, Elektromaterialien, Farbfiltern sowie von Tinten und Druckfarben. Besonders bevorzugt sind Anstrichfarben, Lacke und Druckfarben.

In den nachfolgenden Beispielen bedeutet Prozent Gewichtsprozent, sofern nicht anders angegeben, und Teile Gewichtsteile.

Test-Systeme:

Die Beurteilung der Dispergierbarkeit erfolgt anhand der Farbstärke in einem lufttrocknenden Alkydharzsystem. Dazu werden 4,5 g Pigment mit 25,5 g Anreibelack, bestehend aus 45,38 % Vialkyd® AS 673 h / 70 gew.-%ig in White Spirit, 2,58 % Octa-Soligen® Ca, 10 gew.-%ig in Lackbenzin, 2,82 % Sojalecithin und 49,22 % Lackbenzin 145/200, in einen 150 ml Kunststoffbecher eingewogen, 85 g Glasperlen 3 mm ⌀ zugegeben, dann mit einem Dispergieraggregat, z. B. einem Paintshaker, einmal für 6 Minuten und einmal für neunzig Minuten dispergiert.

Nach dem Dispergieren werden jeweils 60 g sikkativiertes Auflackgemisch (LA4 Let Down Mixture 54 %, Firma Esser-Lacke), bestehend aus 77,14 % Vialkyd AS 673 h / 70 % WS, 0,90 % Bykanol-N®, 2,80 % Octa-Soligen Trockner 173 und 19,16 % Lackbenzin 145/200, zugewogen und homogenisiert.

Die so hergestellten Lacke werden jeweils mit Weißlack (z. B. LA4 White Lacquer 27 %, Firma Esser-Lacke) (ca. 155 sec. Auslaufviskosität DIN-Becher 4 mm Düse), bestehend aus 27,00 % Titandioxid, 49,97 % Vialkyd AS 673 h / 70 % WS, 2,70 % Bentone® 34, 10 % in Lackbenzin, 0,70 % Octa-Soligen Ca 10 %, 5,12 % Lackbenzin 180/210, 11,53 % Lackbenzin 145/200, 1,48 % Bykanol-N, 1,50 % Octa-Soligen Trockner 173, im Verhältnis 1:3,7 (sikkativiertes Auflackgemisch : Weißlack) in einen Kunststoffbecher eingewogen und in einer Schüttelmaschine homogenisiert.

Probe und Vergleich werden mit einem Filmziehgerät (z. B. Vertrieb Erichsen GmbH & Co. KG) nebeneinander auf einer Prüfkarte (z. B. Chromolux® 200 von Zanders Feinpapiere AG) aufgezogen. Die Karten werden sechzig Minuten bei 60 °C getrocknet.

Die Auswertung erfolgt farbmetrisch nach der CIELAB-Formel.

Die Gehaltsbestimmung von polychlorierten Biphenylen erfolgt wie im Artikel N. Sistovaris, U. Donges, B. Dudeck; J. High Res. Chrom.1990(13), 547ff. beschrieben.

Der Gehalt an Rest-Kuppler im Pigment wird per HPLC auf einer Anlage mit quarternärer Gradientenpumpe, variablem Wellenlängendetektor, Säulenofen mit einer Flussrate von 1,5 ml/min bei 40 °C Ofentemperatur und 240 nm Beobachtungswellenlänge und gegen 4-Nitrobenzoesäuremethylester als internem Standard ermittelt. Als Säule kann z. B. eine Phenomenex® Luna 5μm Phenyl-Hexyl, 150 x 4.6 mm verwendet werden. 0,05 g der Probe werden mit 5 ml internem Standard, bestehend aus der genannten Verbindung in 100 ml Acetonitril gelöst, versetzt und 5 min mit Ultraschall behandelt, dann filtriert und 0,2 Microliter auf die Säule gegeben.

Beispiel 1

1.1) Herstellung der Diazoniumsalz-Lösung von 2,4,5-Trichloranilin:

Es werden 250 Teile Wasser vorgelegt und 40,3 Teile 2,4,5-Trichloranilin bei Raumtemperatur zunächst homogen verrührt und mit 193 Vol.-Teilen 31 %iger Salzsäure versetzt. Dann wird mit Eis auf 0 °C abgekühlt. Es wird mit 29 Vol.-Teilen 40 %iger Natriumnitrit-Lösung diazotiert. Die entstandene Diazoniumsalz-Lösung wird nach Zugabe eines Klärhilfsmittels in ein Vorlagegefäß abfiltriert. Der Nitritüberschuss wird durch Zugabe von Amidosulfonsäure entfernt und die Temperatur durch Außenkühlung bei 10 °C gehalten.

1.2) Herstellung einer Lösung der Kupplungskomponente (Naphthol):

Es werden 190 Teile Wasser und 28 Vol.-Teile 33 %iger Natronlauge sowie 1 Teil eines Alkylsulfonats bei Raumtemperatur vorgelegt und 60 Teile 2-Hydroxy-3-Naphthoesäure-N-(2-methylphenyl)amid zugegeben. Die Mischung wird bis zur klaren Lösung (= Lösung 1) gerührt. In einem zweiten Vorratsgefäß wird eine Mischung aus 176 Teilen Wasser, 2 Teilen eines Alkylsulfonats und 32 Vol.-Teilen 80 %iger Essigsäure hergestellt und auf Raumtemperatur eingestellt (= Lösung 2).

1.3) Fällung der Kupplungskomponente im Mikroreaktor:

Die Kuppler-Lösung (Lösung 1) und die verdünnte Säure (Lösung 2) werden mit einer Flussrate von 6 ml/min in die jeweiligen Edukteingänge des Mikroreaktors (Typ: Cytos der Fa. CPC-Systems/Frankfurt) gepumpt. Über den geregelten Wärmetauscher-Kreislauf des Mikroreaktors wird eine Fällungstemperatur von 5 °C vorgegeben und konstant gehalten. Die resultierende Fällung mit einem pH-Wert von 5 wird in einem Vorlagegefäß gesammelt und bei einer Temperatur von 5 °C gehalten. So steht sie der sich anschließenden Azo-Kupplung zur Verfügung.

1.4) Bereitstellung verdünnter Natronlauge zur Regulierung des pH-Werts während der Azo-Kupplung:

150 Teile Wasser/Eis-Mischung werden mit 100 Vol.-Teilen 33 %iger Natronlauge gemischt und durch externe Kühlung bei 5 °C gehalten.

1.5) Azokupplung im Mikroreaktor:

Die Diazoniumsalz-Lösung und die Kuppler-Suspension werden mit einer Flussrate von 8 ml/min in die jeweiligen Edukteingänge des Mikroreaktors (Typ: Cytos der Fa. CPC-Systems/ Frankfurt) gepumpt. Um den erforderlichen pH-Wert von etwa 4,5 für die Azokupplung zu gewährleisten, wird zur Kupplerfällung kurz vor dem Reaktoreingang die unter 1.4) beschriebene verdünnte Natronlauge zudosiert. Die Lauge wird ebenfalls mit Hilfe einer kalibrierten Kolbenpumpe über eine T-Verzweigung mit einer Flussrate von 6 ml/min in die Eduktzuleitung des Mikroreaktors gefördert. An dem Wärmetauscher-Kreislauf des Mikroreaktors ist ein Thermostat angeschlossen, der die gewünschte Reaktionstemperatur von 20°C bis 40 °C einstellt. Die gekuppelte Pigmentsuspension wird in einem Vorlagegefäß gesammelt, abgesaugt, salzfrei gewaschen und getrocknet.

Die Dispergierhärte liegt bei 21, der Restkupplergehalt bei 0,56 %, der Gehalt an polychlorierten Biphenylen bei 6 ppm.

Beispiel 2

Die Synthese erfolgt wie im Beispiel 1 beschrieben, nach dem Schritt 1.3) schließt sich die Mahlung des gefällten Kupplers über eine Dispax-Mühle an.

Die Dispergierhärte liegt bei 25, der Restkupplergehalt bei 0,69 %, der Gehalt an polychlorierten Biphenylen bei 3 ppm.

Vergleichsbeispiel 1 (analog EP 0 319 452 A2, Beispiel 16)

40,3 Teile feinkristallines 2,4,5-Trichloranilin werden in einem Gemisch von 200 Teilen Wasser, 0,5 Teilen eines Alkylsulfonats und 200 Vol.-Teilen 30 %iger Salzsäure über Nacht angerührt. Nach Zugabe von Eis zur gebildeten Suspension des Hydrochlorids diazotiert man durch raschen Zulauf von 29 Vol.-Teilen 40 %iger Natriumnitrit-Lösung und rührt eine Stunde nach. Anschließend wird der Nitritüberschuss mit Amidosulfonsäure zerstört und die Diazoniumsalzlösung geklärt.

Im Kuppelgefäß werden 60 Teile 2-Hydroxy-3-Naphthoesäure-N-(2-methylphenyl)amid in 200 Teilen Wasser, dem 28 Vol.-Teile 33 %iger Natronlauge zugesetzt wurden, bei 85 °C gelöst. Nach Zusatz von einem Teil des Natriumsalzes einer Alkylsulfonsäure zur klaren Lösung wird bei 5 bis 10 °C mit 30 Vol.-Teilen Eisessig versetzt. Die Azokupplung erfolgt bei 40 bis 50°C durch Zulauf der nitritfreien Diazoniumsalzlösung zur Suspension der Kupplungskomponente innerhalb von 2 bis 3 Stunden. Danach lässt man bis zur vollständigen Umsetzung bei 40 bis 50°C nachrühren, saugt das Pigment ab, wäscht mit Wasser salzfrei und trocknet. Die Dispergierhärte liegt bei 52, der Restkupplergehalt bei 3,80 %.

Vergleichsbeispiel 2 (analog WO 90/15844, Beispiel 4)

40 Teile 2,4,5-Trichloranilin werden in einem Gemisch aus 200 Teilen Wasser, 200 Vol.-Teilen 30 %iger Salzsäure und 0,5 Teilen eines sekundären Alkansulfonats über Nacht angerührt. Nach Zugabe von Eis wird mit 29 Vol.-Teilen einer 40 %igen wässrigen Natriumnitritlösung rasch diazotiert und 1 Stunde mit Nitritüberschuss nachgerührt. Der Nitritüberschuss wird dann mit Amidosulfonsäure zerstört. Die geklärte Diazoniumsalzlösung wird mit 5 Teilen Methacrylamid versetzt.

Im Kuppelgefäß werden 59,6 Teile 2-Hydroxy-3-Naphthoesäure-N-(2-methylphenyl)amid in einer Mischung von 400 Teilen Wasser und 28 Vol.-Teilen 33 %iger Natronlauge bei 80 bis 85°C gelöst. Es werden 15 Vol.-Teile einer 10 %igen Lösung des zuvor verwendeten Alkansulfonats zugegeben und mit Eis auf 5 bis 10 °C abgekühlt und dann mit 25 Vol.-Teilen Eisessig versetzt, um die Kupplungskomponente feinverteilt auszufällen.

Die Azokupplung erfolgt bei 15 bis 25°C durch Zulauf der nitritfreien Diazoniumsalzlösung zur Suspension der Kupplungskomponente innerhalb von zwei Stunden. Dabei wird der pH-Wert durch Zutropfen einer 10 %igen Natronlauge bei 4 bis 4,5 gehalten. Nach Auskuppeln und üblicher Aufarbeitung erhält man das Pigment mit einer Dispergierhärte von 50, der Restkupplergehalt liegt bei 2,97 %, der Gehalt an polychlorierten Biphenylen bei 20 ppm.

Vergleichsbeispiel 3 (analog WO2005/105927 A1)

Die unter Punkt 1.2) in Beispiel 1 hergestellte Kupplerlösung wird ohne Ausfällung wie unter Punkt 1.5) im Beispiel 1 beschrieben der Azokupplung zugeführt. Der zur Kupplung notwendige konstante pH-Wert von 5 wird durch geregelte Zudosierung der unter Punkt 1.4) in Beispiel 1 beschriebenen verdünnten Natronlauge erreicht. Nach Lösemittelwaschung und Membranaufreinigung analog WO2005/105927 A1, Beispiel 1 erhält man das Pigment mit einer Dispergierhärte von 46, der Restkupplergehalt liegt bei 1,36 %, der Gehalt an polychlorierten Biphenylen bei 11 ppm.

**Patentansprüche**

1. Verfahren zur Herstellung von ungecoatetem, leicht dispergierbarem C.I. Pigment Red 112 durch Azokupplung in einem Mikroreaktor, **dadurch gekennzeichnet, dass** die Kuppelkomponente in einem vorgeschalteten Mikroreaktor ausgefällt wird und die ausgefällte Kuppelkomponente in feinverteilter Form mit der Diazokomponente in einem Mikroreaktor gekuppelt wird.

2. Verfahren nach Anspruch 1, **dadurch gekennzeichnet, dass** auch die Diazotierung des Amins zum Diazoniumsalz in einem Mikroreaktor durchgeführt wird.

3. Verfahren nach Anspruch 1 oder 2, **dadurch gekennzeichnet, dass** die ausgefällte Kupplungskomponente einer Nassmahlung unterzogen wird.

4. Verfahren nach einem oder mehreren der Ansprüche 1 bis 3, **dadurch gekennzeichnet, dass** die Kupplungskomponente mit einer organischen oder anorganischen Säure ausgefällt wird.

5. Ungecoatetes C.I. Pigment Red 112, **gekennzeichnet durch** eine Dispergierhärte in Alkydharzlack von kleiner oder gleich 45.

6. C.I. Pigment Red 112 nach Anspruch 5, **gekennzeichnet durch** eine Dispergierhärte in Alkydharzlack von kleiner oder gleich 40.

7. C.I. Pigment Red 112 nach Anspruch 5, **gekennzeichnet durch** eine Dispergierhärte in Alkydharzlack von kleiner oder gleich 35.

8. C.I. Pigment Red 112 nach Anspruch 5, **gekennzeichnet durch** eine Dispergierhärte in Alkydharzlack von kleiner oder gleich 25.

9. Ungecoatetes C.I. Pigment Red 112, hergestellt nach dem Verfahren gemäß einem oder mehreren der Ansprüche 1 bis 4.

10. C.I. Pigment Red 112 nach einem oder mehreren der Ansprüche 5 bis 9, **gekennzeichnet durch** einen PCB-Gehalt von kleiner als 25 ppm.

11. C.I. Pigment Red 112 nach einem oder mehreren der Ansprüche 5 bis 10, **gekennzeichnet durch** einen PCB-Gehalt von kleiner als 10 ppm.

12. C.I. Pigment Red 112 nach einem oder mehreren der Ansprüche 5 bis 11, **gekennzeichnet durch** einen Restkuppler-Gehalt von kleiner als 1,0 Gew-%.

13. C.I. Pigment Red 112 nach einem oder mehreren der Ansprüche 5 bis 12, **gekennzeichnet durch** einen Restkuppler-Gehalt von kleiner als 0,70 Gew.-%.

14. Verwendung von C.I. Pigment Red 112 nach einem oder mehreren der Ansprüche 5 bis 13 zum Pigmentieren von hochmolekularen organischen Materialien natürlicher oder synthetischer Herkunft.

15. Verwendung nach Anspruch 14 zum Pigmentieren von Anstrichfarben, Lacken und Druckfarben.

**Claims**

1. A process for preparing uncoated, readily dispersible C.I. Pigment Red 112 by azo coupling in a microreactor, which comprises precipitating the coupling component in an upstream microreactor and coupling the precipitated coupling component in finely divided form to the diazo component in a microreactor.

2. The process as claimed in claim 1, wherein the amine is diazotized to the diazonium salt in a microreactor as well.

3. The process as claimed in claim 1 or 2, wherein the precipitated coupling component is subjected to wet grinding.

4. The process as claimed in one or more of claims 1 to 3, wherein the coupling component is precipitated with an organic or inorganic acid.

5. An uncoated C.I. Pigment Red 112 having a dispersion harshness in alkyd resin varnish of less than or equal to 45.

6. A C.I. Pigment Red 112 as claimed in claim 5, having a dispersion harshness in alkyd resin varnish of less than or

equal to 40.

7. A C.I. Pigment Red 112 as claimed in claim 5, having a dispersion harshness in alkyd resin varnish of less than or equal to 35.

8. A C.I. Pigment Red 112 as claimed in claim 5, having a dispersion harshness in alkyd resin varnish of less than or equal to 25.

9. An uncoated C.I. Pigment Red 112 prepared by the process as claimed in one or more of claims 1 to 4.

10. A C.I. Pigment Red 112 as claimed in one or more of claims 5 to 9, having a PCB content of less than 25 ppm.

11. A C.I. Pigment Red 112 as claimed in one or more of claims 5 to 10, having a PCB content of less than 10 ppm.

12. A C.I. Pigment Red 112 as claimed in one or more of claims 5 to 11, having a residual coupler content of less than 1.0% by weight.

13. A C.I. Pigment Red 112 as claimed in one or more of claims 5 to 12, having a residual coupler content of less than 0.70% by weight.

14. The use of a C.I. Pigment Red 112 as claimed in one or more of claims 5 to 13 to pigment high molecular mass organic materials of natural or synthetic origin.

15. The use as claimed in claim 14 to pigment paints, varnishes or printing inks.

**Revendications**

1. Procédé pour la préparation de C.I. Pigment Red 112 non revêtu, facilement dispersible, par couplage azo dans un microréacteur, **caractérisé en ce que** le composant de couplage est précipité dans un microréacteur disposé en amont et le composant de couplage précipité est couplé sous forme finement divisée avec le composant diazo dans un microréacteur.

2. Procédé selon la revendication 1, **caractérisé en ce que** la diazotation de l'amine en sel de diazonium est également réalisée dans un microréacteur.

3. Procédé selon la revendication 1 ou 2, **caractérisé en ce que** les composants de couplage précipités sont soumis à un broyage humide.

4. Procédé selon l'une ou plusieurs des revendications 1 à 3, **caractérisé en ce que** le composant de couplage est précipité avec un acide organique ou inorganique.

5. C.I. Pigment Red 112, non revêtu, **caractérisé par** une facilité de dispersion dans de la laque de résine alkyde inférieure ou égale à 45.

6. C.I. Pigment Red 112 selon la revendication 5, **caractérisé par** une facilité de dispersion dans de la laque de résine alkyde inférieure ou égale à 40.

7. C.I. Pigment Red 112 selon la revendication 5, **caractérisé par** une facilité de dispersion dans de la laque de résine alkyde inférieure ou égale à 35.

8. C.I. Pigment Red 112 selon la revendication 5, **caractérisé par** une facilité de dispersion dans de la laque de résine alkyde inférieure ou égale à 25.

9. C.I. Pigment Red 112 non revêtu, préparé selon le procédé selon l'une ou plusieurs des revendications 1 à 4.

10. C.I. Pigment Red 112 selon l'une ou plusieurs des revendications 5 à 9, **caractérisé par** une teneur en PCB inférieure à 25 ppm.

**11.** C.I. Pigment Red 112 selon l'une ou plusieurs des revendications 5 à 10, **caractérisé par** une teneur en PCB inférieure à 10 ppm.

**12.** C.I. Pigment Red 112 selon l'une ou plusieurs des revendications 5 à 11, **caractérisé par** une teneur résiduelle en agent de couplage inférieure à 1,0% en poids.

**13.** C.I. Pigment Red 112 selon l'une ou plusieurs des revendications 5 à 12, **caractérisé par** une teneur résiduelle en agent de couplage inférieure à 0,70% en poids.

**14.** Utilisation de C.I. Pigment Red 112 selon l'une ou plusieurs des revendications 5 à 13 pour pigmenter des matériaux organiques de haut poids moléculaire d'origine naturelle ou synthétique.

**15.** Utilisation selon la revendication 14 pour la pigmentation de peintures, de laques et d'encres d'imprimerie.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1469782 A
- EP 0451094 A
- JP 09176514 B
- EP 1081195 A2
- WO 2004094540 A
- WO 02068540 A
- WO 0159013 A
- WO 2005105927 A
- WO 2005105927 A1
- EP 1282666 B1